# EUROPÄISCHE PATENTANMELDUNG

(11) **EP 0 791 286 A2**
(43) Veröffentlichungstag der Anmeldung: **27.08.1997**
(21) Anmeldenummer: 97102262.9
(22) Anmeldetag: 13.02.1997
(51) Int. Cl.: A01C 17/00, A01C 15/00

(54) **Schleuderdüngerstreuer**

(30) Priorität: 22.02.1996 DE 19606586
(71) Anmelder: Amazonen-Werke H. Dreyer GmbH & Co. KG, D-49205 Hasbergen (DE)
(72) Erfinder: Dreyer, Heinz, Dr., Dipl.-Ing., 49205 Hasbergen (DE)

(57) **Zusammenfassung**

Schleuderdüngerstreuer mit Vorratsbehälter und zumindest zwei rotierend angetriebene Schleuderscheiben mit darauf angeordneten Wurfschaufeln, denen die auszubringenden und sich im Vorratsbehälter befindlichen Düngemittel über sich im unteren Vorratsbehälterbereich befindlichen und rotierend angetriebenen Dosier- und Ausbringorgane durch zu öffnende und zu schließende Austrittsöffnungen, die sich in den schrägen oder aufrechten Vorratsbehälterwänden befinden, zuzuführen sind und sich oberhalb des Vorratsbehälterbodens befinden, wobei die Dosier- und Ausbringorgane über die durch den Vorratsbehälterboden geführten Antriebswellen mit der gleichen Drehzahl wie die Streuscheiben direkt angetrieben werden, wobei die Dosier- bzw. Ausbringorgane an aufrechtstehenden und in den oder die Vorratsbehälter hinein ragenden Achsstümpfen angebracht sind, welche gegenläufig zueinander rotieren. Die Dosier- und Ausbringorgane sind als sogenannte Satzrührköpfe, d.h. mit einem abnehmbaren Oberteil, welches einen oder mehrere Rührfinger aufweist, ausgebildet, die/der den Dünger seitlich durch die Öffnungen fördert - also vor diesen Öffnungen vorbei streicht. Der Dünger wird von auf den Streuscheiben angeordneten Wurfschaufeln verteilt, welche einzeln in Scheibenebene winkelverschwenkbar und/oder winkeleinstellbar sind.

## Beschreibung

Die Erfindung betrifft einen Schleuderdüngerstreuer gemäß des Oberbegriffes des Patentanspruches 1.

Ein derartiger Schleuderdüngerstreuer ist beispielsweise durch die DE-AS 14 57 773 bekannt. Dieser Schleuderdüngerstreuer weist einen Vorratsbehälter auf, unter dem zwei rotierend angetriebene Schleuderscheiben angeordnet sind, auf denen sich Wurfschaufeln befinden. Das sich im Vorratsbehälter befindliche Düngemittel wird über im Vorratsbehälter angeordnete Dosier- und Ausbringorgane durch sich in den schrägen Vorratsbehälterwänden befindliche Austrittsöffnungen den Schleuderscheiben zugeführt. Die Dosier- und Ausbringorgane werden über durch den in den Vorratsbehälterboden geführten Antriebswellen mit der gleichen Drehzahl wie die Schleuderscheiben direkt angetrieben. Nachteilig ist bei diesem bekannten Schleuderstreuer, daß die Rührwirkung der Dosier- und Ausbringorgane nicht an die auszubringenden Materialien anzupassen sowie keine Einstellung der Maschine auf die aktuellen Düngerparameter der verschiedenen Düngersorten möglich ist.

Der Erfindung liegt die Aufgabe zugrunde, auf einfachste Weise eine Maschine zum Verteilen der verschiedensten Düngersorten unter Berücksichtigung der Düngerzustände einschließlich evtl. vorhandener Düngerklumpen mit einem guten Streubild zu schaffen.

Diese Aufgabe wird erfindungsgemäß durch die Merkmale des Kennzeichens des Anspruches 1 gelöst. Durch diese Maßnahmen kann in einfacher Weise die Ausbringintensität durch die entsprechende Ausgestaltung der Satzrührköpfe angepaßt bzw. verändert werden.Weiterhin können die damit zusammenhängenden veränderten Düngeraufgabeverhältnisse (Veränderung der Aufgabefläche auf die Wurfscheibe durch die entsprechende Veränderung der Satzrührköpfe der Aufgabefläche auf die Wurfscheibe) durch Verstellung der Wurfschaufeln kompensiert werden.

Es hat sich als vorteilhaft herausgestellt, daß die Wurfschaufeln in Scheibenebene winkelverschwenkbar angeordnet sind, daß in dem Bereich der winkelverschwenkbaren Wurfschaufeln unterschiedliche, unverwechselbare Einstellskalen für die Wurfschaufeln auf den Schleuderscheiben bzw. am Rande der Schleuderscheiben angeordnet sind, und daß die einzelnen Wurfschaufeln unterschiedliche Abstände vom Schaufelende bis zur Drehachse aufweisen.

Desweiteren ist zur Durchführung des Grenzstreuen vorgesehen, daß zumindest eine der Wurfschaufeln zur Normalstreuen gegen eine Grenzstreuschaufel austauschbar ist. Hierbei ist vorteilhaft, daß nur die längere der Normalstreuschaufeln gegen eine kürzere Grenzstreuschaufel ausgetauscht wird, wenn der Schleuderdüngerstreuer zum Grenzstreuen eingesetzt wird.

Falls nur einseitig gestreut wird, hat sich als vorteilhaft herausgestellt, daß die Dosier- und Ausbringorgane von den Antriebswellen abkuppelbar sind. Hierbei ist es möglich, auch nur eines der Dosier- und Ausbringorgane von einer der Antriebswellen abzukuppeln.

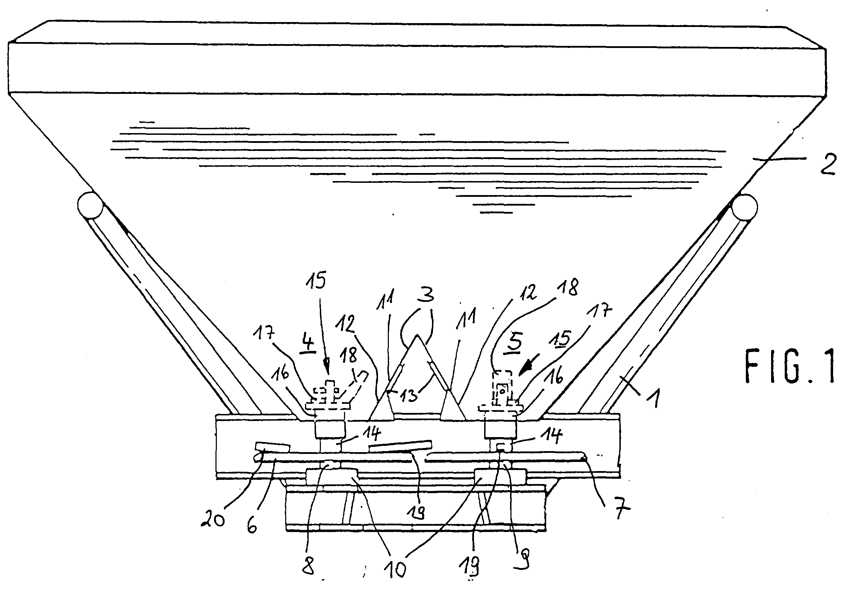

Weitere Einzelheiten der Erfindung sind den übrigen Unteransprüchen, der Beispielsbeschreibung und den Zeichnungen zu entnehmen. Hierbei zeigen
- Fig.1: den Schleuderdüngerstreuer in der Ansicht von hinten und in Prinzipdarstellung,
- Fig.2: die linke der beiden Schleuderscheiben in der Draufsicht und in vergrößerter Darstellung, wobei die Schleuderscheiben mit Wurfschaufeln zum Normalstreuen versehen ist,
- Fig.3: die Schleuderscheibe gemäß Fig.2, wobei jedoch die Schleuderscheibe mit zum Grenzstreuen eingestellten Wurfschaufeln ausgerüstet ist und

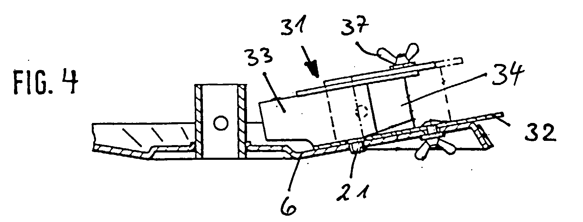

- Fig.4: die Anordnung der Grenzstreuschaufeln gemäß Fig.3 in der Ansicht IV-IV.

Der Schleuderdüngerstreuer weist den Rahmen 1 und den Vorratsbehälter 2 auf. Auf der Vorderseite des Rahmens 1 in bekannter und daher nicht näher dargestellter Weise Dreipunktkupplungselemente zum Anbau des Schleuderdüngerstreuers an den Dreipunktkraftheber eines Schleppers angeordnet.

Der Vorratsbehälter ist durch das dachförmige Mittelteil 3 in seinem unteren Bereich in die beiden Auslauftrichter 4 und 5 aufteilt. Unterhalb der Auslauftrichter 4 und 5 befindet sich jeweils eine rotierend angetriebene Schleuderscheibe 6 bzw. 7, die auf den Getriebeausgangswellen 8 und 9 des Zahnradgetriebes 10 drehfest angeordnet sind und ineinander entgegengesetzter Drehrichtung rotierend von einer Kraftquelle, beispielsweise eines Ölmotors oder einer Zapfwelle des den Schleuderdüngerstreuers tragenden Schleppers angetrieben werden.

In den schrägen Vorratsbehälterwänden 11 im dachförmigen Mittelteil 3 sind die Austrittsöffnungen 12 angeordnet, die über Schieber 13 in unterschiedlichen Öffnungsweiten einstellbar und zu verschließen sind. Die Getriebeausgangswellen 8 und 9 sind in Form von in den Vorratsbehälter 2 hineinragenden Achsstümpfen 14 nach oben weitergeführt. Auf diesen Achsstümpfen 14 sind die Dosier- und Ausbringorgane 15 in Form von sogenannten Satzrührköpfen angeordnet. D.h., daß die einzelnen Teile des Rührkopfes 15 in austauschbarer und abnehmbarer Weise auf den auf den Achsstümpten 14 angeordneten Halterungselementen 16 befestigt sind. Die Satzrührköpfe 15 weisen ein abnehmbares Oberteil 17, welches ein oder mehrere Rührfinger 18 aufweist, auf. Diese Rührfinger 18 rotieren mit der gleichen Drehzahl wie die Schleuderscheiben 6 und 7 und fördern den Dünger seitlich durch die Öffnungen 12. Der Rührfinger 18 streicht also vor den Austrittsöffnungen 12 in einem ausreichend kleinen Abstand vorbei, so daß auch sich evtl. in dem Dünger befindliche Düngerklumpen zerdrückt werden, so daß der Dünger in gewünschter Weise durch die Austrittsöffnungen 12 zu den Schleuderscheiben 6 und 7 gelangt. Die Satzrührköpfe 15 sind mit nicht dargestellten Kupplungselementen mit der Antriebswelle 8, 9 bzw. 14 verbunden und können mittels dieser Kupplungselemente von der Antriebswelle abgekuppelt und stillgesetzt werden.

Auf den Schleuderscheiben 6 und 7 sind jeweils die längere Wurfschaufel 19 und die kürzere Wurfschaufel 20 angeordnet. Die Wurfschaufeln 19 und 20 der Schleuderscheibe 7 sind spiegelbildlich zu den Wurfschaufeln 19 und 20 der Schleuderscheibe 6 aufgrund des ineinander entgegengesetzten Drehsinnes der Schleuderscheiben 6 und 7 ausgebildet.

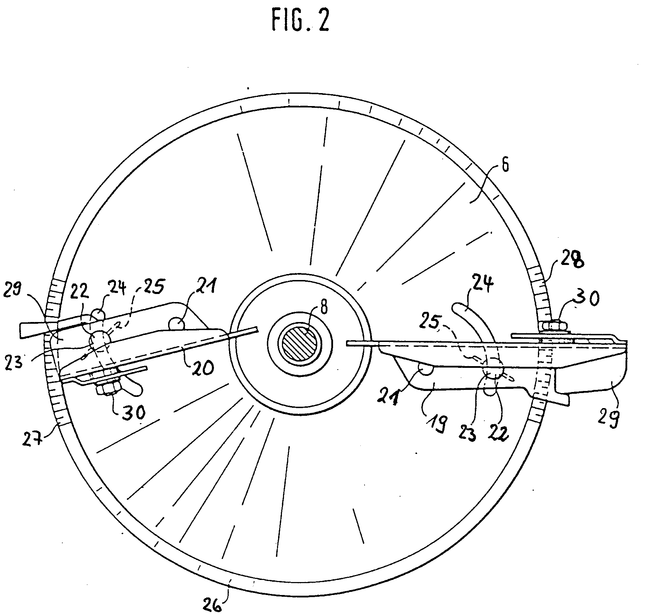

Mittels der auf den Schleuderscheiben 6 bzw. 7, wobei gemäß Fig.2 nur die linke Schleuderscheibe dargestellt ist, angeordneten, winkelverschwenkbaren Wurfschaufeln 19 und 20 wird der auf der jeweiligen Schleuderscheibe 6 bzw. 7 auftreffende Düngemitteistrom gleichmäßig über genau einstellbare Arbeitsbreiten abgeschleudert. Die Wurfschaufel 20 weist eine kürzere Länge als die Wurfschaufel 20 auf, so daß die kürzeren Wurfschaufeln 20 die Düngermittelpartikel über den inneren Bereich der Arbeitsbreite abschleudern, während die längeren Wurfschaufeln 19 die Düngermittelpartikel weiter nach außen, also in den äußeren Bereich der Arbeitsbreite bzw. Streubreite abschleudern.

Die Wurfschaufeln 19 und 20 sind jeweils mittels des Bolzens 21 und der Knebelschraubenverbindung 22 auf der Schleuderscheibe 6 bzw. 7 befestigt. Der Bolzen 21 ist fest an der Wurfschaufel 19 bzw. 20 angeordnet und faßt in die sich in die Schleuderscheibe 6 befindliche Bohrung. Der Schraubbolzen 23 der Knebelschraubenverbindung 22 faßt jeweils in das sich in der Schleuderscheibe 6 bzw. 7 befindliche Langloch 24. Unter der Schleuderscheibe 6 bzw. 7 ist auf den jeweiligen Schraubbolzen 21 jeweils die Knebelmutter 25 angeordnet. Durch Lösen der jeweilgen Knebelmutter 25 können die Wurfschaufeln 19 und 20 jeweils anhand der sich auf dem Außenrand 26 befindlichen Skalen 27 und 28 je nach Arbeitsbreite und Düngersorte exakt eingestellt werden, so daß eine gleichmäßige Düngerverteilung erreichbar ist. Mittels der auf den Schleuderscheiben 6 und 7 angeordneten Wurfschaufeln 19 und 20 und entsprechender Winkeleinstellung je nach Düngersorte und Arbeitsbreite und der Ausgestaltung des Satzrührkopfes, wie die Werte in der entsprechenden Streutabelle angegeben sind, läßt sich ein Normalstreubild erzielen. Dieses Normalstreubild weist flach abfallende Streuflanken zu beiden Seiten des Düngerstreuers auf. Durch die beiden nebeneinander liegenden Grundstreubilder und der entsprechenden Überlappung der schräg abfallenden Streuflanken wird eine gleichmäßige Düngerverteilung erreicht.

An den äußeren Enden der Wurfschaufeln 19 und 20 befinden sich Schwenkflügel 29, welche über einen Schwenkbolzen 30 jeweils in aufrechter Ebene schwenkbar an der Rückwand der Wurfschaufeln 19 und 20 angeordnet sind. In nach unten geschwenkter Position leiten die Schwenkflügel den Düngerstrom mit einem flachen Winkel zur Horizontalen ab. Diese Position ist die Normaldüngungsposition. Zum Spätdüngen, wenn bereits hoch aufgewachsenes Getreide gedüngt werden soll, werden die Schwenkflügel 29 nach oben geschwenkt, so daß sich der Dünger mit einem größeren Winkel als in der Normaldüngungspotion zur Horizontalen abschleudert. Hierdurch ist in einfacher Weise eine Spätdüngung des Getreides möglich.

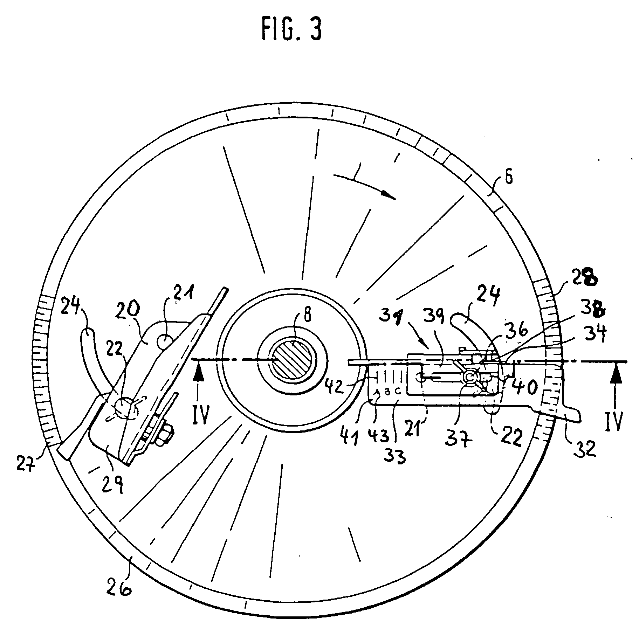

Um nun mit dem Schleuderdüngerstreuer auch an der Feldrandgrenze streuen zu könne, so daß kein Dünger oder keine nennenwerten Düngermengen über die Feldrandgrenze hinausgeworden wird, ist es erforderlich, auf der der Feldrandgrenze zugewandten Schleuderscheibe 6 bzw. 7 die längere Wurfschaufel 19 gemäß Fig.2 gegen die Grenzstreuschaufel 31 gemäß Fig.3 auszutauschen. Entsprechend der Angabe in der Streutabelle werden die Wurfschaufeln 20 und 31 anhand des Zeigers 32 und den Skalen 27 und 28 auf die eingegebenen Werte eingestellt. Mittels der Wurfschaufeln 20 und 31 läßt sich ein einseitig steil abfallendes Streubild erzielen. Die Streuflanke fällt auf der einen Seite, die der Feldrandgrenze benachbart ist, steil ab. Somit läßt sich mittels der Wurfschaufeln 20 und 31 ein Grenzstreubild erreichen. Auf der dem Feldinneren zugewandten Seite des Düngerstreuers wird der Dünger so abgeworfen, daß eine flach abfallende Streuflanke erzielt wird. Auf der Feldrandgrenze zugewandten Seite wird ein Streubild mit der steil abfallenden Streuflanke erreicht. Hierbei wird der Dünger bis knapp an die Feldrandgrenze, welche beispielsweise durch einen Wassergraben gebildet wird, herangeworfen. Durch die entsprechende Winkeleinstellung der Wurfschaufeln 20 und 31 mit der noch weiter unten beschriebenen Längeneinstellung der Wurfschaufel 31 läßt sich die Streuflanke verschieben, somit wird deutlich, daß das Streubild mit der schräg abfallenden Streuflanke auf der einen Seite durch den Einsatz der Grenzstreuschaufel 31 in ein Grenzstreubild mit einer steil abfallenden Streuflanke verändert wird.

Zur Erzielung eines Grenzstreubildes ist zunächst der Austausch der längeren Wurfschaufel 19 zum Normalstreuen gegen die Grenzstreuschaufeln 31 erforderlich. Die Grenzstreuschaufel 31 wird zur Erzielung des Grenzstreubildes benutzt. Um in Verbindung mit der Grenzstreuschaufel 31 und der kürzeren Streuschaufel 20 das Grenzstreubild zu erreichen, kann es erforderlich sein, daß die kürzere Normalstreuschaufel zum Grenzstreuen gegenüber der Normalstreuposition, wie in Fig.2 dargestellt ist, bezogen auf die Drehrichtung 32 der Schleuderscheibe 6, in die in Fig.3 eingezeichnete Position zurückverschwenkt werden muß. In den meisten Einsatzfällen muß die Grenzstreuschaufel 31 eine kürzere wirksame Länge wie die kürzere Normalstreuschaufeln aufweisen. Die Grenzstreuschaufel 31 ist ebenfalls winkelverschwenkbar auf der Schleuderscheibe 6 angeordnet.

Die Grenzstreuschaufel besteht aus den beiden zueinander in Längsrichtung der Wurfschaufel verschiebbaren Teilen 33 und 34. Das innere Teil 33 ist mittels des Bolzens 21 und der Knebelschraubenverbindung 22 auf der Schleuderscheibe 6 in Scheibenebene winkelverschwenkbar angeordnet. Auf dem oberen Quersteg 35 ist der Schraubbolzen 36 befestigt. Auf dem Schraubbolzen 36 ist die Knebelmutter 37 aufgeschraubt. Das äußere Teil 34 weist die Rückwand 38 auf. Weiterhin weist das äußere Teil 34 den Quersteg 39 mit dem Langloch 40 auf. In das Langloch 40 faßt der Schraubbolzen 37. Über die Knebelschraube 37 läßt sich das äußere Teil 34 exakt gegenüber dem inneren Teil 33 einstellen. Zur exakten Längeneinstellung der Grenzstreuschaufel 31 ist auf der Oberseite des Steges 41 des inneren Teils 33 die Skala 42 mit den zugeordneten Symbolen 43 vorgesehen.

Zur Erzielung unterschiedlicher Arbeitsbreiten mit steil abfallender Streustärke beim Grenzstreuen läßt sich also die Wurfschaufel 31 durch die entsprechende Einstellung der Teile 33 und 34 zueinander über die Skala 42 und die Knebelschraube 37 in verschiedenen Längen genau einstellen.

Durch eine entsprechende Längenänderung der Grenzstreuschaufel 31 sowie der entsprechenden Winkeleinstellung der Grenzstreuschaufel 31 bzw. der Wurfschaufel 20 läßt sich ein Grenzstreubild mit großer Streu- und Arbeitsbreitenvariationen erzielen.

## Patentansprüche

1. Schleuderdüngerstreuer mit Vorratsbehälter und zumindest zwei rotierend angetriebene Schleuderscheiben mit darauf angeordneten Wurfschaufeln, denen die auszubringenden und sich im Vorratsbehälter befindlichen Düngemittel über sich im unteren Vorratsbehälterbereich befindlichen und rotierend angetriebenen Dosier- und Ausbringorgane durch zu öffnende und zu schließende Austrittsöffnungen, die sich in den schrägen oder aufrechten Vorratsbehälterwänden befinden, zuzuführen sind und sich oberhalb des Vorratsbehälterbodens befinden, wobei die Dosier- und Ausbringorgane über die durch den Vorratsbehälterboden geführten Antriebswellen mit der gleichen Drehzahl wie die Streuscheiben direkt angetrieben werden, wobei die Dosier- bzw. Ausbringorgane an aufrechtstehenden und in den oder die Vorratsbehälter hinein ragenden Achsstümpfen angebracht sind, welche gegenläufig zueinander rotieren, dadurch gekennzeichnet, daß die Dosier- und Ausbringorgane als sogenannte Satzrührköpfe (15), d.h. mit einem abnehmbaren Oberteil, welches einen oder mehrere Rührfinger (18) aufweist, ausgebildet sind, die/der den Dünger seitlich durch die Öffnungen (12) fördert - also vor diesen Öffnungen (12) vorbei streicht, daß der Dünger von auf den Streuscheiben (6, 7) angeordneten Wurfschaufeln (19, 20) verteilt wird, welche einzeln in Scheibenebene winkelverschwenkbar und/oder winkeleinstellbar sind.

2. Schleuderdüngerstreuer nach Anspruch 1, dadurch gekennzeichnet, daß die Wurfschaufeln (19, 20) in Scheibenebene winkelverschwenkbar angeordnet sind, daß in dem Bereich der winkelverschwenkbaren Wurfschaufeln (19, 20, 31) unterschiedliche, unverwechselbare Einstellskalen (27) für die Wurfschaufeln (19, 20, 31) auf den Schleuderscheiben (6, 7) bzw. am Rand (26) der Schleuderscheibe (6, 7) angeordnet sind, und daß die einzelnen Wurfschaufeln (19, 20) unterschiedliche Abstände von Schaufelende bis zur Drehachse aufweisen.

3. Schleuderdüngerstreuer nach einem oder mehreren der vorstehenden Ansprüche, wobei auf jeder Schleuderscheibe (6, 7) zumindest zwei Wurfschaufeln (19, 20) angeordnet sind, deren Abstreukanten unterschiedliche Abstände zur Drehachse der Schleuderscheiben aufweisen, dadurch gekennzeichnet, daß zumindest eine der Wurfschaufeln (19) zum Normalstreuen gegen die Grenzstreuschaufel (31) austauschbar ist.

4. Schleuderdüngerstreuer nach einem oder mehreren der vorstehenden Ansprüche, dadurch gekennzeichnet, daß nur die längere (19) der Normalstreuschaufeln (19, 20) gegen eine kürzere Grenzstreuschaufel (31) ausgetauscht wird, wenn der Schleuderdüngerstreuer zum Grenzstreuen eingesetzt wird.

5. Schleuderdüngerstreuer nach einem oder mehreren der vorstehenden Ansprüche, dadurch gekennzeichnet, daß die Dosier- und Ausbringorgane von den Antriebswellen abkuppelbar sind.
